# EUROPÄISCHE PATENTSCHRIFT

(11) **EP 4 434 720 B1**
(45) Veröffentlichungstag und Bekanntmachung des Hinweises auf die Patenterteilung: **27.08.2025**
(21) Anmeldenummer: 24164022.6
(22) Anmeldetag: 18.03.2024
(51) Int. Cl.: B29C 51/08, B29C 51/04, B29C 51/18, B29C 51/26, B29L 31/00

(54) **FORMWERKZEUG ZUR HERSTELLUNG VON FORMTEILEN UND VERFAHREN ZUR HERSTELLUNG VON FORMTEILEN UNTER VERWENDUNG EINES FORMWERKZEUGS**
MOLD FOR PRODUCING MOLDED PARTS AND METHOD FOR PRODUCING MOLDED PARTS USING A MOLD
MOULE POUR LA FABRICATION DE PIÈCES MOULÉES ET PROCÉDÉ DE FABRICATION DE PIÈCES MOULÉES À L'AIDE D'UN MOULE

(30) Priorität: 20.03.2023 DE 102023106953
(43) Veröffentlichungstag der Anmeldung: 25.09.2024
(73) Patentinhaber: KIEFEL GmbH, 83395 Freilassing (DE)
(72) Erfinder: Van der Schans, Johannes Marius, 5161 XG Sprang-Capelle (NL); Decoz, Cornelis Hendrikus Albertinus, 5161 ES Sprang-Capelle (NL)
(74) Vertreter: DTS Patent- und Rechtsanwälte PartmbB

(56) Entgegenhaltungen:
- DE-A1- 102013 012 152
- DE-A1- 2 846 426
- DE-C1- 19 600 755
- US-B2- 10 293 523

## Beschreibung

### Technisches Gebiet

Es werden ein Formwerkzeug zur Herstellung von Formteilen aus einem formbaren Material und ein Verfahren zur Herstellung von Formteilen aus einem formbaren Material unter Verwendung eines Formwerkzeugs beschrieben. Als formbares Material können bspw. Folien aus Kunststoff, Folien mit Öffnungen (bspw. netzartige Struktur) und/oder faserhaltige Materialien verwendet werden.

### Hintergrund

Zum Umformen und/oder Verpressen von formbaren Materialien werden in der Regel Formwerkzeuge verwendet, wobei das formbare Material in eine Kavität eingebracht und dort mit Hilfe von Druck oder durch Erzeugen von Überdruck oder Unterdruck in der Kavität bzw. einer Formkammer verformt wird. Ein Einbringen von Gas/Gasgemisch (z.B. Luft) in die Kavität oder das Erzeugen eines Vakuums werden beim klassischen Thermoformen verwendet. Hierbei wird bspw. eine Folie in der Kavität entweder durch den Überdruck gegen eine Formwand der Kavität gedrückt oder eine Folie an die Formwand einer Kavität angesaugt.

Beim Formen von Formteilen aus einem faserhaltigen Material wird in der Regel das Material eingebracht und dort zwischen Formflächen eines Formwerkzeugs verpresst, wobei im Gegensatz zur Umformung bei Folien eine Reduzierung der Wandstärke bzw. Dicke des zu verpressenden Vorformlings bei gleichzeitig sehr hoher Temperatur (> 200 °C) erfolgt. Es kann dabei bspw. ein Vorformling in die Kavität eingebracht werden, der sich hinsichtlich Feuchtigkeit, Form, Größe und Stärke/Dicke vom herzustellenden Erzeugnis unterscheidet. Es können weiterhin auch lose Fasern in eine Kavität eingebracht und zwischen Formflächen eines Formwerkzeugs verpresst werden.

Zum Umformen der unterschiedlichen Materialien sind daher stets verschiedene Werkzeugausbildungen erforderlich. Zudem weisen die jeweiligen Werkzeugausbildungen verschiedene Nachteile auf. So ist die Formgebung für Erzeugnisse stark eingeschränkt, bspw. im Hinblick auf Hinterschnitte und Rändern am Boden der Erzeugnisse. Im Stand der Technik können so geformte Erzeugnisse nur mit einem hohen Aufwand und komplexen Formwerkzeugen hergestellt werden, die eine Vielzahl an beweglichen Komponenten aufweisen. Des Weiteren ist es bspw. mit klassischen Thermoformwerkzeugen nicht möglich, Folien mit Öffnungen, bspw. einer netzartigen Struktur, umzuformen, da in der Kavität ein Überdruck oder Unterdruck keine Verformung bereitstellen kann, weil die eingebrachte oder angesaugte Luft durch die Öffnungen zu einem Druckausgleich auf beiden Seiten der Folie führt.

Darüber hinaus ist es beim klassischen Thermoformen erforderlich, Überdruck oder Unterdruck bereitzustellen, um eine Folie zu verformen.

Weiterer relevanter Stand der Technik ist in folgenden Dokumenten offenbart: DE 196 00 755 C1, US 10 293 523 B2, DE 2846 426 A1 sowie DE 10 2013 012152 A1.

### Aufgabe

Demgegenüber besteht die Aufgabe darin, eine Lösung zur Herstellung von Formteilen aus einem formbaren Material anzugeben, welche die Nachteile des Stands der Technik behebt und bei welcher mit einfachen Mitteln bei gleichzeitig reduziertem Einsatz von Hilfsmitteln eine Verformung erreicht wird, die keinen Einschränkungen im Hinblick auf die Gestalt der herzustellenden Formteile unterliegt.

### Lösung

Die vorstehend genannte Aufgabe wird durch ein Formwerkzeug mit den Merkmalen von Anspruch 1 gelöst. Zudem wird ein Verfahren mit den Merkmalen von Anspruch 13 angegeben. Weitere vorteilhafte Ausgestaltungen sind in den abhängigen Ansprüchen beschrieben.

Mit Hilfe des Formwerkzeugs ist es bspw. möglich, eine Folie aus einem Kunststoff ohne das Erzeugen von Unterdruck oder Überdruck zu verformen, wobei analog zu klassischen Thermoformverfahren vor einer Umformung ein Strecken der Folie erfolgt. Im Stand der Technik ist hierzu ein Streckhelfer oder Formstempel vorgesehen. Der Streckhelfer drückt die Folie dabei in eine Kavität, ohne jedoch die Folie an die formgebende Innenwand der Kavität zu drücken. Das finale Umformen durch Pressen der Folie gegen die formgebende Innenwand erfolgt im Stand der Technik durch das Erzeugen von Unterdruck zwischen der Folie und der formgebenden Innenwand der Kavität oder durch das Erzeugen von Überdruck zwischen der Folie und dem Streckhelfer. Die hierin beschriebene Lösung ermöglicht durch die Ausbildung der zweiten Werkzeugkomponente ein Strecken einer Folie, wobei hierbei noch keine finale Formgebung erfolgen kann. Erst beim Überdrücken wird die Folie vollständig gegen die formgebende Innenwand der Kavität, also die erste Formfläche gedrückt, wobei das flexible Material durch das Überdrücken verformt wird und damit den Formdruck für die Folie bereitstellt.

Mit einem solchen Formwerkzeug können auch bspw. Kunststoffe mit einer netzartigen Struktur verformt werden, da die Umformung ohne das Erzeugen von Unterdruck oder Überdruck erfolgt. Über die zweite Werkzeugkomponente kann dabei eine Folie mit einer netzartigen Struktur zuerst entsprechend einem Vorstrecken in die Kavität einer ersten Werkzeugkomponente gebracht und dann durch das Überdrücken der zweiten Werkzeugkomponente eine Verformung des flexiblen Materials erreicht werden, wodurch die Folie gegen die formgebende erste Formfläche in der Kavität gedrückt wird.

Ein weiteres Einsatzgebiet für ein derart ausgebildetes Formwerkzeug umfasst die Herstellung von Formteilen aus einem faserhaltigen Material. Hierbei kann ein solches Formwerkzeug bspw. sowohl zum Verpressen von trockenen Fasern ("Dry Fiber") als auch eines feuchten Vorformlings ("Wet Fiber") eingesetzt werden. Ein feuchtes Material als formbares Material liegt ab einem Wasseranteil von etwa 30 Gew.-% vor. Ein Material mit einem Wasseranteil kleiner 30 Gew.-% wird als trockenes Material bezeichnet.

Bei der Herstellung von Formteilen aus einem faserhaltigen Material kann zuerst faserhaltiges Material in die Kavität eingebracht werden, wobei sich eine Faserschicht an der ersten Formfläche anlegt. Das Anlegen der Faserschicht kann auch durch das Einbringen der zweiten Werkzeugkomponente unterstützt werden, welche die Fasern gegen die erste Formfläche drückt. Anschließend erfolgt ein Überdrücken der zweiten Werkzeugkomponente, wobei ein Verpressen der Faserschicht erfolgt. Durch das Überdrücken wird das flexible Material der zweiten Werkzeugkomponente verformt. Die Verformung führt dann zu einer Verkleinerung des Abstands zwischen der ersten Formfläche und der Oberfläche der zweiten Werkzeugkomponente, so dass die Faserschicht komprimiert wird. Dabei wird die Faserschicht verpresst, so dass eine Verbindung der Fasern erreicht werden kann. In weiteren Ausführungen kann zusätzlich oder alternativ ein Auspressen von Wasser beim Überdrücken durch die Komprimierung des Fasermaterials erfolgen.

Je nach Ausbildung der zweiten Werkzeugkomponente kann die zweite Formfläche bspw. nur bereichsweise ein flexibles Material aufweisen, so dass eine Verformung der zweiten Formfläche nur bereichsweise in der Kavität erfolgt, d.h. dass es nur in korrespondierenden Bereichen der ersten Formfläche zu einem Andrücken oder zusätzlichem Andrücken einer Folie oder eines Fasermaterials kommt.

Erfindungsgemäß weist die Kavität mindestens einen Hinterschnitt auf und das formbare Material über das flexible Material des mindestens einen Abschnitts durch ein Überdrücken der zweiten Werkzeugkomponente in den Hinterschnitt der Kavität drückbar sein. In solchen Ausführungen kann bspw. eine Folie oder ein Fasermaterial zwischen der ersten Formfläche und der zweiten Formfläche verformt werden, d.h. die Folie oder das Fasermaterial werden über die zweite Formfläche gegen die erste Formfläche gedrückt. Bei Erreichen des unteren Totpunkts liegen die Folie oder das Fasermaterial bis auf den Bereich mit dem Hinterschnitt an der ersten Formfläche an. Anschließend wird die zweite Werkzeugkomponente überdrückt, so dass sich das flexible Material der zweiten Werkzeugkomponente, das sich auf Höhe bzw. im Bereich des Hinterschnitts befindet, verformt und dabei in den Hinterschnitt gedrängt wird. Damit wird die Folie oder das Fasermaterial in den Hinterschnitt gedrückt. Ein so ausgebildetes Werkzeug ermöglicht auf einfache Art und Weise die Ausbildung von Hinterschnitten bei Formteilen ohne bewegliche Elemente, wie bspw. Schieber und dergleichen, die in Formrichtung oder quer dazu verlagert werden müssen.

In weiteren Ausführungen kann der mindestens eine Abschnitt der zweiten Formfläche mit dem flexiblen Material im unteren Totpunkt der zweiten Werkzeugkomponente einem Bereich der ersten Formfläche mit dem mindestens einen Hinterschnitt gegenüberliegen.

In weiteren Ausführungen kann die zweite Formfläche mindestens partiell Öffnungen aufweisen. Die Öffnungen können für die verschiedenen Anwendungsgebiete unterschiedliche Funktionen aufweisen. Bspw. kann bei der Herstellung von Formteilen aus einem feuchten, faserhaltigen Material hierüber ein Absaugen von Wasserdampf erfolgen. Dazu kann vorgesehen sein, dass das Fasermaterial innerhalb der Kavität über die erste Formfläche beheizt wird. Die erste Formfläche sowie die erste Werkzeugkomponente können dabei aus einem thermisch leitenden Material, wie bspw. einem Metall oder einer Metalllegierung bestehen oder eine solche aufweisen, wobei das Aufheizen über Heizvorrichtungen in der ersten Werkzeugkomponente erfolgen kann.

In weiteren Ausführungen kann über die Öffnungen in der zweiten Formfläche ein Druckausgleich bereitgestellt werden, so dass es beim Schließen der Kavität nicht zu einem "Luftpolster" oder dergleichen kommt. Dies gilt für Anwendungen zur Herstellung von Formteilen aus einem faserhaltigen Material (feucht und trocken) sowie zur Herstellung von Formteilen aus einer Folie (Kunststoff).

In noch weiteren Ausführungen kann über die Öffnungen auch ein Einbringen eines Gases oder Gasgemischs (bspw. Luft) oder ein Absaugen eines Gases oder Gasgemischs erfolgen. So kann bspw. nur ein Bereich der zweiten Formfläche ein flexibles Material aufweisen, welches beim Überdrücken verformt wird. Damit auch in den Bereichen der zweiten Formfläche ohne flexibles Material ein Andrücken der Folie an die erste Formfläche erfolgt, kann über die Öffnungen in der zweiten Formfläche bspw. Luft eingebracht werden, so dass ein Überdruck im Bereich zwischen der Folie und der zweiten Formfläche bereichsweise erzeugt wird, wodurch wiederum die Folie im Überdruckbereich gegen die erste Formfläche gedrückt wird. Im Bereich der zweiten Formfläche mit dem flexiblen Material kann dabei ein Hinterschnitt in der ersten Formfläche ausgebildet sein. Somit wird dann durch das Überdrücken das flexible Material verformt und die Folie in die Kavität gedrückt.

In weiteren Ausführungen kann ein in die Kavität der ersten Werkzeugkomponente eintauchendes Formelement der zweiten Werkzeugkomponente vollständig aus einem flexiblen Material bestehen. Eine solche Ausführung kann bspw. zum Formen von Formteilen aus einem faserhaltigen Material zum Einsatz kommen. Dabei kann zunächst durch das eintauchende Formelement, welches als Formstempel dient, das faserhaltige Material innerhalb der gesamten Kavität in einem ersten Schritt bis zum Erreichen des unteren Totpunkts vorgepresst werden. Nach dem Überdrücken wird dann durch Verformung des flexiblen Materials das vorgepresste faserhaltige Material zusätzlich verdichtet, weil durch die Verformung das flexible Material je nach Geometrie und Ausbildung des eintauchenden Formelements sowie der Geometrie und Ausbildung der Kavität bzw. der ersten Formfläche das flexible Material das faserhaltige Material weiter verpresst. Dabei kann das vorgepresste faserhaltige Material bspw. in bestimmten Regionen weiter verpresst werden, so dass Formkörper mit variierenden Wandstärken gefertigt werden können.

Ferner kann in weiteren Ausführungen das faserhaltige Material bis zum Erreichen des unteren Totpunkts verpresst werden und erst durch Überdrücken faserhaltiges Material in einen Hinterschnitt gedrückt werden.

Für die vorstehenden Ausführungen kann das eintauchende Formelement damit eine formgebende Oberfläche aufweisen, die zum Formen des in die Kavität eingebrachten Materials dient, welche vollständig ein flexibles Material ist oder aufweist.

In weiteren Ausführungen kann ein in die Kavität der ersten Werkzeugkomponente eintauchendes Formelement der zweiten Werkzeugkomponente massiv oder als Hohlkörper ausgebildet sein. Ein massiv ausgebildetes Formelement kann bspw. vollständig aus einem flexiblen Element bestehen und mit einem Stempel verbunden sein, der beim Überdrücken nicht verformbar ist und zur Bewegung des Formelements sowie zum Verpressen dient. Ein solcher Stempel kann bspw. aus Metall oder einer Metalllegierung bestehen. In weiteren Ausführungen kann der Stempel mit weiteren Stempeln einer Werkzeuganordnung verbunden und gekoppelt sein, so dass für eine bestimmte Anzahl an Werkzeugen gleichzeitig ein Verpressen und Überdrücken erfolgen kann. Ein Formelement als Hohlkörper weist ebenfalls einen Stempel auf, der zur Bewegung des Formelements und zum Verpressen dient. Der Stempel kann Streben oder andere Elemente aufweisen, welche eine Verbindung mit einer Hülle aus dem flexiblen Material bereitstellen. In den Verbindungsbereichen zwischen Streben etc. und dem flexiblen Material kann eine Verformung des flexiblen Materials beim Überdrücken stärker oder schwächer ausfallen, so dass hierüber auch maßgeblich Einfluss auf die Verformung des flexiblen Materials genommen werden kann, um ein definierbares Ergebnis für ein Formteil zu erreichen.

In weiteren Ausführungen kann das Formelement hierzu innenliegende Stützstrukturen aufweisen.

In weiteren Ausführungen können die Stützstrukturen eine Verformung der zweiten Formfläche beim Überdrücken beeinflussen. Die Stützstrukturen können bspw. eine Hülle aus flexiblem Material halten und damit auch die Verformung des flexiblen Materials und die Verformung/Bewegung des flexiblen Materials bei einem Druck auf das flexible Material beeinflussen.

In weiteren Ausführungen kann die gesamte zweite Formfläche ein flexibles Material aufweisen, das einen innenliegenden Kern aus einem nicht verformbaren Material umgibt. Das nicht verformbare Material kann bspw. ein Metall oder eine Metalllegierung sein, die mit einem Stempel aus den gleichen nicht verformbaren Materialien verbunden ist. Der innenliegende Kern ist von dem flexiblen Material umgeben. Dabei ist beim Verpressen des formbaren Materials das flexible Material durch den innenliegenden Kern gestützt, so dass es nicht zu einer Ausweichbewegung des flexiblen Materials ins Innere der zweiten Werkzeugkomponente bzw. eines in die Kavität eintauchenden Formteils kommen kann. Aufgrund der Ausbildung (Material und Struktur) des flexiblen Materials kann dieses erst dann verformt werden, wenn der untere Totpunkt erreicht ist und das Überdrücken erfolgt.

In weiteren Ausführungen kann das flexible Material Verstärkungen und/oder Schwachstellen aufweisen, welche die Verformbarkeit des flexiblen Materials beim Überdrücken beeinflussen. Verstärkungen können bspw. in das flexible Material eingebrachte Streben oder dergleichen sein, welche eine höhere Presskraft für eine Verformung benötigen als das flexible Material, so dass bspw. die Verformung des flexiblen Materials im Bereich mit den Verstärkungen später einsetzt als im restlichen Bereich oder nicht so stark ausgeprägt ist, wie im restlichen Bereich. Schwachstellen im flexiblen Material können bspw. Gas- oder Gasgemischeinschlüsse sein. Weiterhin können Schwachstellen auch Abschnitte sein, in welchen das flexible Material eine geringe Stärke (Wanddicke) gegenüber anderen Bereichen aufweist. Auch Einkerbungen an der Innen- und/oder Außenseite können Schwachstellen bilden. Verstärkungen können hierzu gezielt Bereiche sein, die bspw. eine größere Wandstärke aufweisen. Auch die Materialwahl und -zusammenstellung können die Verformbarkeit des flexiblen Materials beeinflussen.

In weiteren Ausführungen kann das flexible Material aus verschiedenen Materialien bestehen, die sich im Hinblick auf die Verformbarkeit des flexiblen Materials beim Überdrücken unterscheiden. Damit lassen sich verschiedene Verformungen und schließlich unterschiedliche Ausbildungen von Formteilen realisieren.

In weiteren Ausführungen kann die zweite Formfläche mindestens zwei Abschnitte aus einem flexiblen Material aufweisen, die sich im Hinblick auf die Verformbarkeit des flexiblen Materials beim Überdrücken unterscheiden. Hierbei kann die Auswahl der Materialien bspw. je nach Ausbildung von Hinterschnitten etc. erfolgen, so dass eine ausreichende Verformung des flexiblen Materials erfolgt, um bspw. das formbare Material in unterschiedlich tiefe und breite Hinterschnitte zu drücken. Auch die Position der Hinterschnitte kann hierfür maßgeblich sein, bspw. bei konisch nach oben hin auslaufenden Formteilen.

In weiteren Ausführungen kann das flexible Material Silikon und/oder thermoplastische Elastomere aufweisen oder daraus bestehen. Je nach benötigter Verformung aufgrund der Geometrie und Ausgestaltung eines Formteils und der daraus resultierenden Geometrie und Gestalt einer Kavität bzw. der ersten Formfläche können unterschiedlich stark verformbare Materialien eingesetzt werden. Es ist ferner bei der Auswahl an flexiblen Materialien zu berücksichtigen, ob das formbare Material mit dem flexiblen Material kompatibel ist, so dass es zu keiner Beschädigung oder Beeinträchtigung des formbaren Materials sowie des flexiblen Materials kommt. Darüber hinaus ist zu berücksichtigen, welchen Temperaturen das flexible Material ausgesetzt ist. Insbesondere bei der Herstellung von Formteilen aus einem feuchten, faserhaltigen Material wird häufig das Fasermaterial beim Verpressen zusätzlich erwärmt. Daher sind entsprechende Silikone und thermoplastische Elastomere auszuwählen. Bspw. kann eine Temperaturbeständigkeit für das flexible Material von bis zu 300 °C erforderlich sein.

In weiteren Ausführungen kann die erste Formfläche zweite Öffnungen aufweisen, über welche beim Verpressen und bei gleichzeitiger Wärmezufuhr entstehender Wasserdampf abgesaugt bzw. abgeführt werden kann.

In weiteren Ausführungen können die erste Werkzeugkomponente und/oder die zweite Werkzeugkomponente über mindestens eine Heizeinrichtung beheizbar sein, so dass bspw. die Feuchtigkeit von faserhaltigem Material reduziert und/oder die Verbindung von Fasern verbessert bzw. unterstützt werden kann. Auch aus Kunststoffen bestehende Folien können in weiteren Anwendungen unter Wärmeeinwirkung leichter verformt werden. Heizeinrichtungen können bspw. Heizpatronen, induktive Heizeinrichtungen etc. umfassen.

In weiteren Ausführungen kann die erste Formfläche zweite Öffnungen aufweisen, über welche beim Verpressen und bei gleichzeitiger Wärmezufuhr entstehender Wasserdampf abgesaugt bzw. abgeführt werden kann.

Die vorstehend genannte Aufgabe wird zudem auch durch ein Verfahren zur Herstellung von Formteilen aus einem formbaren Material unter Verwendung eines Formwerkzeugs mit mindestens einer ersten Werkzeugkomponente und mindestens einer zweiten Werkzeugkomponente gelöst, wobei die erste Werkzeugkomponente eine Kavität mit einer ersten Formfläche aufweist, und wobei die zweite Werkzeugkomponente eine zweite Formfläche und mindestens partiell ein flexibles Material aufweist, welches mindestens einen Abschnitt der zweiten Formfläche bildet, aufweisend folgende Schritte:
- Einbringen eines formbaren Materials in eine Kavität mindestens einer ersten Werkzeugkomponente,
- Einbringen einer zweiten Werkzeugkomponente in die Kavität der mindestens einen ersten Werkzeugkomponente durch relative Verlagerung der mindestens einen ersten Werkzeugkomponente und mindestens einer zweiten Werkzeugkomponente, wobei eine zweite Formfläche der mindestens einen zweiten Werkzeugkomponente das formbare Material mindestens bereichsweise gegen die erste Formfläche bewegt, und
- Überdrücken der mindestens einen zweiten Werkzeugkomponente nach Erreichen eines unteren Totpunkts innerhalb der Kavität, wodurch ein flexibles Material, das mindestens einen Abschnitt der zweiten Formfläche bildet, verformt wird und durch die Verformung das flexible Material das formbare Material gegen einen korrespondierenden Abschnitt der ersten Formfläche drückt.

Das Verfahren ermöglicht die Herstellung von Formteilen und die Ausbildung von Strukturen in einem Formteil mit einfachen Mitteln, wobei durch das Überdrücken eine Verformung des flexiblen Materials erfolgt, was zu einer zusätzlichen Umformung des formbaren Materials führt. Die vorstehend für das Formwerkzeug angegebenen Ausführungen und Vorteile gelten in entsprechender Weise für das hierin beschriebene Verfahren.

In weiteren Ausführungen kann die Kavität mindestens einen Hinterschnitt aufweisen, wobei das formbare Material über das flexible Material des mindestens einen Abschnitts der zweiten Formfläche beim Überdrücken in den Hinterschnitt der Kavität gedrückt wird. Somit wird ein zweistufiges Herstellungsverfahren bereitgestellt, welches sich gegenüber bekannten Verfahren dadurch auszeichnet, dass allein über die zweite Werkzeugkomponente ein Druck ausgeübt wird. Es ist somit nicht erforderlich, weitere formgebende Werkzeugteile zu bewegen und anzusteuern.

In weiteren Ausführungen kann nach dem Formen des Formteils in der Kavität das Überdrücken beendet werden, wodurch das flexible Material seine vor dem Überdrücken vorliegende Form wieder einnimmt und anschließend die mindestens eine zweite Werkzeugkomponente aus der Kavität bewegt wird.

Weitere Merkmale, Ausgestaltungen und Vorteile ergeben sich aus der nachfolgenden Darstellung von Ausführungsbeispielen mit Bezug auf die Figuren.

### Kurzbeschreibung der Figuren

In den Zeichnungen zeigt:
- Fig. 1: eine schematische Darstellung einer Formeinrichtung zur Herstellung von Formteilen aus einem formbaren Material;
- Fig. 2: eine schematische Darstellung eines Formwerkzeugs zur Herstellung von Formteilen;
- Fig. 3: eine schematische Darstellung des Formwerkzeugs von Fig. 2 nach dem Einbringen eines formbaren Materials;
- Fig. 4: eine schematische Darstellung des Formwerkzeugs von Fig. 2 in einem ersten Formschritt;
- Fig. 5: eine schematische Darstellung des Formwerkzeugs von Fig. 2 nach einem zweiten Formschritt;
- Fig. 6: eine schematische Darstellung eines Formwerkzeugs einer weiteren Ausführungsform;
- Fig. 7: eine schematische Darstellung eines Formteils;
- Fig. 8: eine schematische Darstellung einer zweiten Werkzeugkomponente eines Formwerkzeugs in noch weiteren Ausführungsformen; und
- Fig. 9: ein Verfahren zum Herstellen eines Formteils.

### Detaillierte Beschreibung von Ausführungsbeispielen

Nachfolgend werden mit Bezug auf die Figuren Ausführungsbeispiele der hierin beschriebenen technischen Lehre dargestellt. Für gleiche Komponenten, Teile und Abläufe werden in der Figurenbeschreibung gleiche Bezugszeichen verwendet. Für die hierin offenbarte technische Lehre unwesentliche oder für einen Fachmann sich erschließende Komponenten, Teile und Abläufe werden nicht explizit wiedergegeben. Im Singular angegebene Merkmale sind auch im Plural mitumfasst, sofern nicht explizit etwas anderes ausgeführt ist. Dies betrifft insbesondere Angaben wie "ein" oder "eine".

Die Figuren zeigen Ausführungsbeispiele von Vorrichtungen für die Herstellung von Formteilen aus einem formbaren Material, wobei die gezeigten Ausführungsbeispiele keine Einschränkung im Hinblick auf weitere Ausbildungen und Modifikationen der beschriebenen Ausführungen darstellen.

Nachfolgend wird die Herstellung von Formteilen 200 aus einem formbaren Material beschrieben, wobei als formbares Material ein faserhaltiges Material verwendet wird. Bei dem faserhaltigen Material kann es sich sowohl um ein trockenes Fasermaterial als auch um feuchtes bzw. nasses Fasermaterial handeln. Von trockenem Fasermaterial wird regulär bei einem Wasseranteil kleiner 30 Gew.-% gesprochen. Bei einem Wasseranteil ab ca. 30 Gew.-% wird von feuchtem Fasermaterial gesprochen. Das Fasermaterial kann dabei als Vorformling vorliegen und in einem Formwerkzeug 30 weiterverarbeitet werden. Alternativ kann Fasermaterial ohne eine Struktur oder ähnliches in eine Kavität 36 eines Formwerkzeugs 30 eingebracht und dort zu einem Formteil 200 geformt werden. Vorformlinge weisen in der Regel bereits im Wesentlichen die Gestalt des herzustellenden Formteils 200 auf. Insbesondere kann faserhaltiges Material nur natürliche Fasern aufweisen.

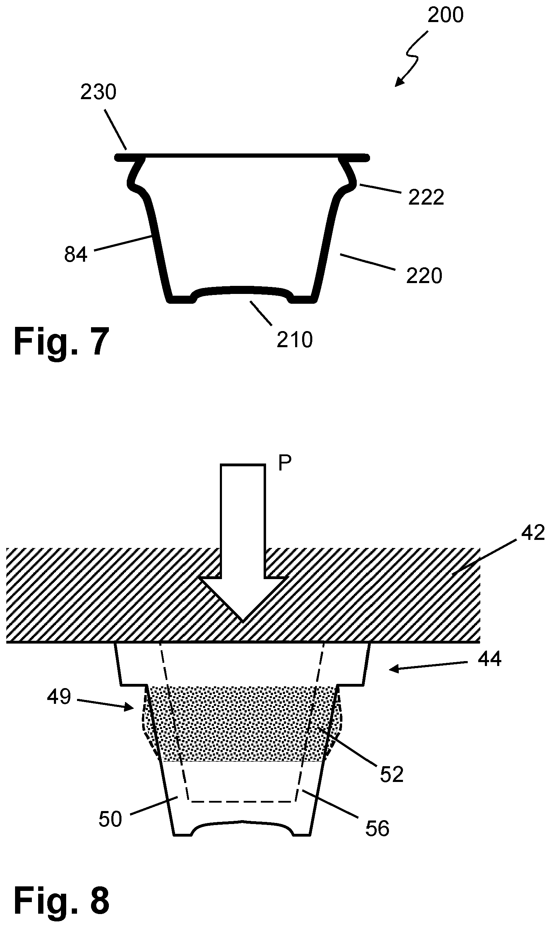

Ein Formteil 200 kann insbesondere ein dreidimensionales Formteil 200 sein, wie bspw. Becher, Deckel, Schalen, Kapseln, Teller und weitere Form- und/oder Verpackungsteile (bspw. als Halter-/Stützstrukturen für elektronische oder andere Geräte). Das faserhaltige Material kann weiter Zusätze aufweisen, welche sich auf die mechanischen Eigenschaften und die Barrierewirkung auswirken. Nach Maßgabe der Zusammensetzung des faserhaltigen Materials können aus einem faserhaltigen, formbaren Material hergestellte Formteile biologisch abbaubar sein und selbst wieder als Ausgangsmaterial für die Herstellung von dreidimensionalen Formteilen, wie bspw. eines becherartigen Formteils 200 (siehe Fig. 7) aus einem faserhaltigen Material, dienen und kompostiert werden, weil diese in der Regel vollständig zersetzt werden können und keine bedenklichen, umweltgefährdenden Stoffe enthalten.

Anstelle eines faserhaltigen Materials lassen sich mit den in den Figuren gezeigten Formwerkzeugen 30 auch Folien umformen. Insbesondere die besondere Ausbildung eines in die Kavität 36 einer ersten Werkzeugkomponente 32 eintauchenden Formelements 44 ermöglicht mit einem einfachen Aufbau und einer einfachen Ausgestaltung des Formwerkzeugs 30 bspw. die Ausbildung von Hinterschnitten 38 etc., ohne dass bspw. zusätzliche Schieber oder dergleichen erforderlich sind. Die Ausbildung des Formwerkzeugs 30 ermöglicht dabei zudem in weiteren Ausführungen auch die Herstellung von Formteilen aus einer Folie, welche eine netzartige Struktur aufweist, weil kein Einbringen einer "Formluft" oder der Erzeugung eines Vakuums, wie bei klassischen Thermoformwerkzeugen und -verfahren notwendig, erforderlich sind.

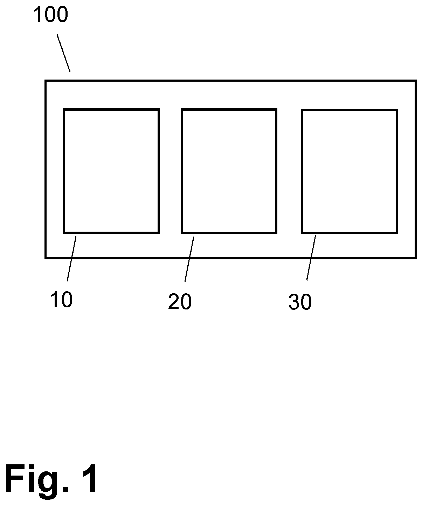

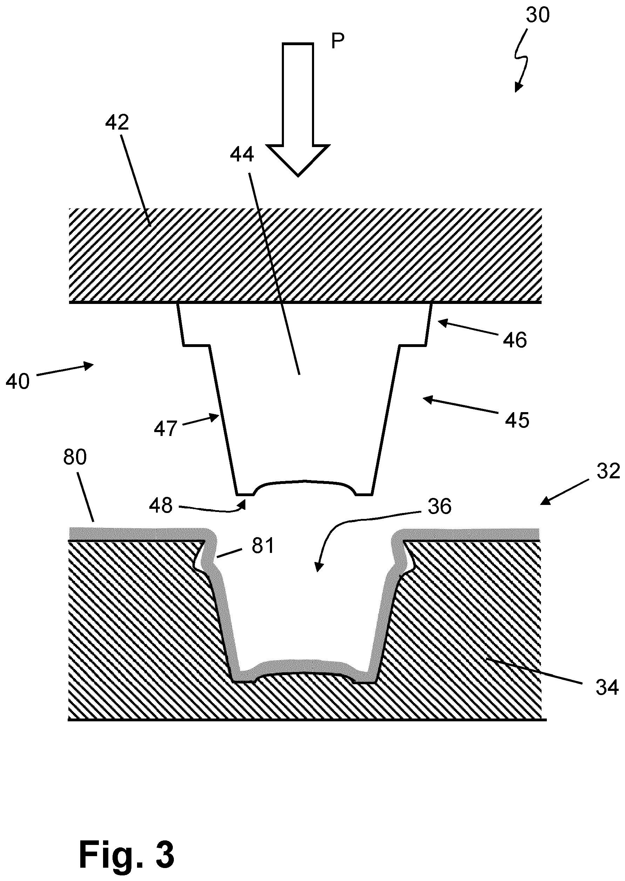

Fig. 1 zeigt eine schematische Darstellung einer Formeinrichtung 100 zur Herstellung von Formteilen 200 aus einem formbaren Material. Die Formeinrichtung 100 weist mindestens eine Steuerung 10, eine Zuführeinrichtung 20 und ein Formwerkzeug 30 zum Formen eines formbaren Materials auf. Die Steuerung 10 dient zur Steuerung der Prozesse und Abläufe der Formeinrichtung 100 und steht hierzu mit den entsprechenden Einrichtungen in Verbindung. Die Steuerung 10 regelt den Energiebedarf und Stoffumsatz und verarbeitet hierzu Informationen und Steuerbefehle. Die Zuführeinrichtung 20 dient zur Zufuhr von formbarem Material, bspw. faserhaltigem Material, welches entweder als Vorformling, als Fasermatte oder als loses Fasermaterial über die Zuführeinrichtung 20 in mindestens eine Kavität 36 mindestens eines Formwerkzeugs 30 eingebracht wird. In weiteren Ausführungen kann das faserhaltige Material befeuchtet werden, um beim anschließenden Verpressen die Bindungswirkung zwischen den Fasern des faserhaltigen Materials zu verbessern. Hierzu wird Dampf in eine Kavität 36 eingebracht, nachdem das faserhaltige Material in die Kavität 36 eingebracht wurde. Vorzugsweise erfolgt das Einbringen von Dampf unter Druck. Hierzu kann das Einbringen von Wasserdampf im zumindest teilweise geschlossenen Zustand des Formwerkzeugs 30 erfolgen. In weiteren Ausführungen kann über Kanäle und Öffnungen in ersten Formflächen 37 und/oder zweiten Formflächen 45 im geschlossenen Zustand des Formwerkzeugs ein Dampf direkt in die Faserschicht eingebracht werden. Geeignete Drücke liegen im Bereich von 1 bis 25 bar, wobei der Druck von mehreren Faktoren (Dimension und Geometrie des herzustellenden Formteils 200; Schichtdicke der Faserschicht 80, faserhaltiges Material als Vorformling, Matte oder lose Fasern, Eigenschaften des faserhaltigen Materials, etc.) abhängt. Das Einbringen von Feuchtigkeit mittels Dampf hat sich dabei als sehr effiziente Methode herausgestellt, um die Feuchtigkeit schnell in die Fasern des faserhaltigen Materials zu bringen. In weiteren Ausführungen kann eine Formeinrichtung100 ein Werkzeug mit einer Vielzahl an Kavitäten 36 und korrespondierenden Formelementen 44 (siehe Fig. 3 bis 6) aufweisen. In noch weiteren Ausführungen kann eine Formeinrichtung 100 auch eine Vorformstation aufweisen, in welcher Vorformlinge erzeugt werden. Hierzu können ferner in weiteren Ausführungen Formeinrichtungen 100 zusätzlich oder alternativ einen Vorratsbehälter für formbares Material aufweisen. Schließlich kann eine Formeinrichtung 100 eine Vorrichtung zur Entnahme und zur weiteren Verarbeitung geformter Formteile 200 aufweisen.

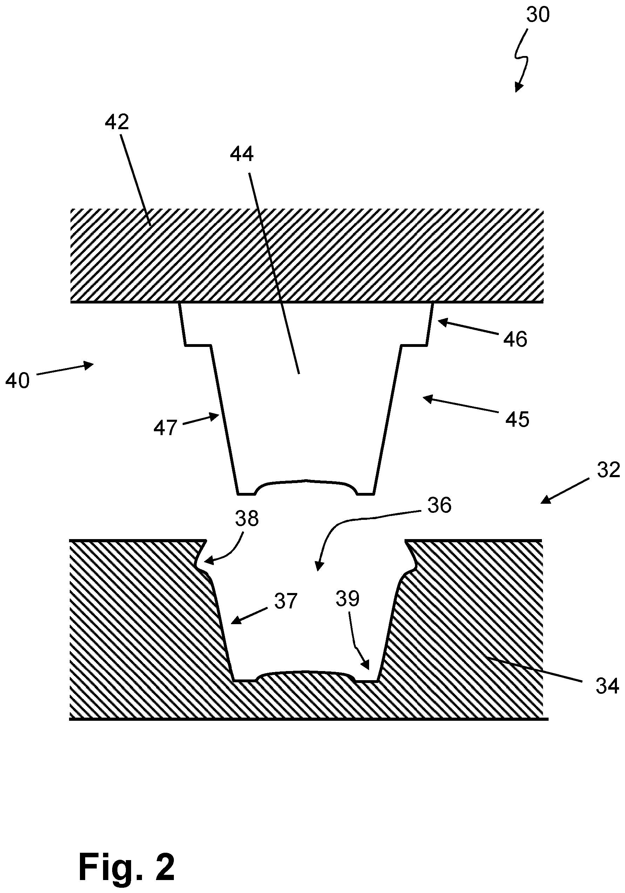

Fig. 2 zeigt eine schematische Darstellung eines Formwerkzeugs 30 zur Herstellung von Formteilen 200. Das Formwerkzeug 30 weist eine erste Werkzeugkomponente 32 und eine zweite Werkzeugkomponente 40 auf, welche eine erste Werkzeugplatte 34 bzw. eine zweite Werkzeugplatte 42 aufweisen. Die Werkzeugplatten 34 und 42 können bspw. aus einem Metall bzw. einer Metalllegierung bestehen. In weiteren nicht dargestellten Ausführungen kann eine erste Werkzeugplatte 34 mehrere Kavitäten 36 aufweisen, die in der Werkzeugplatte 34 angeordnet sind. Anders als in den Ausführungsbeispielen gezeigt, können auf einer Werkzeugplatte 34 ein oder mehrere Formen mit Kavitäten 36 angeordnet sein. Solche Formen können bspw. austauschbar mit der Werkzeugplatte 34 verbunden, bspw. verschraubt, sein.

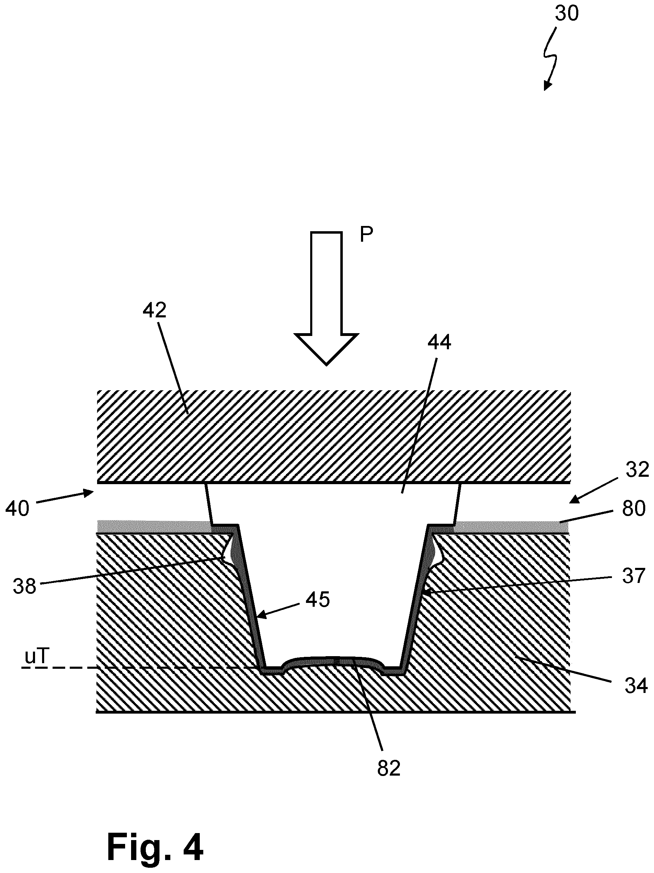

Die Kavität 36 weist eine formgebende erste Formfläche 37 auf. Die erste Formfläche 37 definiert die äußere Form des herzustellenden Formteils 200, welches im gezeigten Ausführungsbeispiel ein rotationssymmetrischer Körper ist. In weiteren Ausführungen können auch nicht rotationssymmetrische Formteile in entsprechend geformten Kavitäten hergestellt werden. Die erste Formfläche 37 weist im oberen Bereich einen umlaufenden Hinterschnitt 38 sowie in einem unteren Bodenbereich einen umlaufenden Randbereich 39 auf. Die direkt an die Kavität 36 angrenzende Oberfläche der Werkzeugplatte 34 kann eine ringförmige Formfläche ausbilden, die zur Ausbildung eines Rands 230 eines Formteils 200 dient, wie in den Fig. 4-6 schematisch gezeigt, und damit auch Teil der ersten Formfläche 37 sein kann. Die Oberfläche der ersten Formfläche 37 kann in weiteren Ausführungen eine Antihaftbeschichtung aufweisen und/oder zur Reduzierung der Haftwirkung ausgebildet sein. Unterhalb der ersten Formfläche 37 und/oder innerhalb der ersten Werkzeugplatte 34 können Heizeinrichtungen vorgesehen sein, die über eine Steuerung 10 ansteuerbar sind, um die erste Werkzeugplatte 34 und hierüber die erste Formfläche 37 zu beheizen. Durch eine Temperierung der ersten Formfläche 37 kann die Verformung eines eingebrachten Materials (bspw. faserhaltiges Material; Polymerfolie) unterstützt und gezielt beeinflusst werden.

An der zweiten Werkzeugplatte 42 ist ein Formelement 44 angeordnet, welches so zu der darunter angeordneten Kavität 36 ausgerichtet ist, dass das Formelement 44 in die Kavität 36 eintauchen kann. Das Formelement 44 kann bspw. über entsprechende Mittel mit der Werkzeugplatte 42 verbunden, bspw. verschraubt sein. In weiteren Ausführungen mit mehreren Kavitäten 36 sind an der Werkzeugplatte 42 mehrere korrespondierende Formelemente 44 angeordnet.

Das Formelement 44 ist ein Formkörper mit einem oberen Formbereich 46 und einem eintauchenden Formbereich 47. Der Formkörper ist über den oberen Formbereich 46 mit der zweiten Werkzeugplatte 42 in geeigneter Weise reversibel oder irreversibel verbunden. Die Oberfläche des eintauchenden Formbereichs 47 bildet die zweite Formfläche 45. Analog zu einer ringförmigen Oberfläche als Teil der ersten Formfläche 37 kann die dieser ringförmigen Oberfläche des ersten Werkzeugkörpers 34 gegenüberliegende Oberfläche des oberen Formbereichs 46 ebenfalls einen Teil der zweiten Formfläche 45 bilden. Gemäß der Ausführung der Kavität 36 für rotationssymmetrische Formteile 200 ist auch das Formelement 44 mindestens im Bereich, der für das Formen von Formteilen 200 erforderlich ist, im gezeigten Ausführungsbeispiel rotationssymmetrisch ausgebildet. Im Ausführungsbeispiel trifft dies auf den eintauchenden Formbereich 47 zu.

In dem gezeigten Ausführungsbeispiel weist das Formelement 44 mindestens im Bereich der zweiten Formfläche 45 ein flexibles Material auf. Als flexibles Material wird ein solches Material verwendet, das die erforderlichen Eigenschaften hat, um ab einem bestimmbaren Druck auf den Formkörper innerhalb der Kavität 36 verformt zu werden, wenn nach dem Verpressen des eingebrachten faserhaltigen Materials gegen die erste Formfläche 37 über das Formelement 44 ein Überdrücken erfolgt. Es ist dabei wesentlich, dass ein solches flexibles Material so und an den Stellen eingesetzt wird, dass eine gezielte Verformung des flexiblen Materials durch Überdrücken erfolgen kann. Alternativ können die Wahl und Ausgestaltung eines oder mehrerer flexibler Materialien im Bereich der zweiten Formfläche 45 und/oder innerhalb des Formkörpers des Formelements nach Maßgabe des Verformungsgrads eines flexiblen Materials und der benötigten Verformung durch ein Überdrücken ausgewählt werden.

Geeignete Materialen für das flexible Material sind bspw. thermoplastische Elastomere oder Silikone. Für die Beeinflussung der Verformbarkeit können in den flexiblen Materialien Zusätze eingebracht sein. Alternativ oder zusätzlich kann durch Einbringen von Elementen aus einem anderen Material, bspw. einem Drahtring oder Drahtgeflecht, die Verformung in diesem Bereich angepasst werden und dabei geringer ausfallen als in dem Abschnitt eines flexiblen Materials ohne solche Elemente. Weiterhin können in einem flexiblen Material zusätzlich oder alternativ Schwachstellen ausgebildet sein. Schwachstellen können bspw. Bereiche des flexiblen Materials mit Freiräumen sein, wobei sich die Freiräume zum Beispiel ringförmig konzentrisch zur Hochachse durch die Kavität 36 und/oder geradlinig entlang der zweiten Formfläche 45 erstrecken können. Solche Freiräume können beispielsweise auch als "Gas-/Luftblasen" innerhalb des flexiblen Materials abschnittsweise vorgesehen sein. In weiteren Ausführungen können solche Schwachstellen auch dadurch ausgebildet sein, dass das flexible Material in diesen Abschnitten eine geringere Dichte aufweist.

Das flexible Material bewirkt beim Verpressen des in die Kavität 36 eingebrachten faserhaltigen Materials ein Andrücken des faserhaltigen Materials an die erste Formfläche 37. Das faserhaltige Material wird dabei zwischen der ersten Formfläche 37 und der zweiten Formfläche 45 verpresst. Im Bereich des Hinterschnitts 38 erfolgt bei einem gewöhnlichen Druck (P₁) auf das faserhaltige Material über das Formelement 44 kein Verpressen des faserhaltigen Materials in den Hinterschnitt 38, da die Gestalt des Formelements 44 kein Eindrücken in den Hinterschnitt 38 ermöglicht (siehe Fig. 4). Um das faserhaltige Material in den Hinterschnitt 38 zu drücken und dort genauso wie im restlichen Bereich der Kavität 36 zu verpressen, wird, wie nachfolgend beschrieben, das Formelement 44 überdrückt (P₂), so dass das im Bereich des Hinterschnitts 38 befindliche flexible Material des Formelements 44 verformt wird und dabei nur in Richtung des Hinterschnitts 38 ausweichen kann, wobei P₁ < P₂ ist. Die Verformung aufgrund der Ausweichbewegung bewirkt dann ein Drücken des faserhaltigen Materials in den Hinterschnitt 38 und dort ein Verpressen desselben. Da das flexible Material bei einem Formelement 44 mit einer zweiten Formfläche 45, die vollständig ein flexibles Material an ihrer Oberfläche aufweist, im restlichen Bereich nicht ausweichen kann, erfolgt dort auch keine weitere Verformung.

Zum Verpressen von faserhaltigem Material sind die Werkzeugplatte 34 und die Werkzeugplatte 42 relativ zueinander bewegbar, so dass das Formelement 44 in die Kavität 36 eintauchen kann. In einem ersten Formschritt wird dabei der eintauchende Formbereich 47 in die Kavität 36 eingebracht und das faserhaltige Material verpresst. Anschließend erfolgt ein Überdrücken des Formelements 44, wobei es zu einer Verformung des flexiblen Materials im Bereich des Hinterschnitts 38 kommt und dieses das faserhaltige Material in den Hinterschnitt 38 und dort verpresst. Zur Verlagerung der beiden Werkzeugplatten 34 und 42 für ein Verpressen von faserhaltigem Material und zum Überdrücken können entsprechende Antriebe und Vorrichtungen, bspw. Kniehebel, vorgesehen sein, die über die Steuerung 10 ansteuerbar sind.

Fig. 3 zeigt eine schematische Darstellung des Formwerkzeugs 30 von Fig. 2 nach dem Einbringen eines formbaren Materials. In dem gezeigten Ausführungsbeispiel erfolgt das Einbringen einer losen Faserschicht 80. Die Faserschicht 80 besteht aus einer Vielzahl von losen Fasern, die nur eine geringe Bindung untereinander haben, so dass die Faserschicht 80 vliesartig ausgebildet ist. Bei einer solchen Faserschicht 80 kann auch von "Fluff Pulp" gesprochen werden, womit sehr weiche Fasermatten gemeint sind, die bspw. für Windeln odergleichen zum Einsatz kommen. Die hierin bezeichnete Faserschicht 80 kann dabei entsprechend solcher Fasermatten ausgebildet sein und entsprechende Eigenschaften aufweisen, sich jedoch in der Art der enthaltenen Fasern unterscheiden. Bspw. kann die lose Faserschicht 80 verhältnismäßig weiche Fasern aus einem natürlichen Ursprungsmaterial (bspw. natürliche Fasern aus Zellulose) mit einer Faserlänge zwischen 0,1 und 5 mm aufweisen, wobei die Fasern nur aufeinander aufliegen und weder thermisch noch anderweitig verpresst bzw. verbunden sind.

Nach Maßgabe des herzustellenden Formteils 200 und dessen Eigenschaften kann das verwendete Material bestimmt werden. Es können ferner Additive vorgesehen sein, welche die Eigenschaften eines Formteils 200 beeinflussen (bspw. Barriereeigenschaften etc.). Weiterhin kann anstelle einer losen Faserschicht 80 ein Vorformling aus losen Fasern oder vorgepressten Fasern mit einer geringen Bindung in die Kavität 36 eingebracht werden.

Die eingebrachte Faserschicht 80 weist einen geringen Feuchtigkeitsanteil auf und ist daher im Wesentlichen als "trockene" Faserschicht zu klassifizieren. Die Fasern der Faserschicht 80 können in weiteren Ausführungen auch auf die Oberfläche der ersten Werkzeugplatte 34 und/oder der ersten Formfläche 37 aufgetragen werden und erst an der Oberfläche eine Faserschicht 80 ausbilden.

In dem in Fig. 3 gezeigten Zustand befindet sich das Formwerkzeug 30 im geöffneten Zustand, wobei die erste Werkzeugplatte 34 und die zweite Werkzeugplatte 42 zueinander beabstandet sind, so dass die Kavität 36 zum Einbringen der Faserschicht 80 freiliegt. Nach dem Einbringen der Faserschicht 80 werden die erste Werkzeugplatte 34 und die zweite Werkzeugplatte 42 relativ zueinander verlagert, wobei in Fig. 3 die obere zweite Werkzeugplatte 42 bspw. über einen Kniehebel und einen korrespondierenden Antrieb nach Maßgabe von Steuerbefehlen durch die Steuerung 10 nach unten gedrückt wird, wie durch den Pfeil P schematisch angedeutet.

In Fig. 3 ist schematisch angedeutet, dass die Faserschicht 80 während und/oder nach dem Einbringen zumindest leicht in den Hinterschnitt 38 eintaucht. Dies kann jedoch nicht immer erreicht werden oder in weiteren Ausführungen nicht gewünscht sein, so die gezeigte Anordnung der Faserschicht 80 nur ein Beispiel zeigt und die Anordnung nicht hierauf limitiert.

Fig. 4 zeigt eine schematische Darstellung des Formwerkzeugs 30 in einem ersten Formschritt, nachdem die Faserschicht 80 in die Kavität 36 eingebracht wurde. Hierbei wird über die zweite Werkzeugplatte 42 ein Druck P₁ ausgeübt. Infolgedessen wird die Faserschicht 80 im Bereich der ersten Formfläche 37 verpresst, so dass eine vorgepresste Faserschicht 82 erzeugt wird. Hierzu ist das Formelement 44 nach unten bis zum Erreichen eines unteren Totpunkts uT verlagert worden. Bspw. kann der untere Totpunkt uT sich auf eine untere Formfläche 48 des Formelements 44 beziehen. Der Druck zum Verpressen des faserhaltigen Materials wird dabei weiter aufrechterhalten. Dies führt dazu, dass das faserhaltige Material verpresst und dabei die Faserschicht 80 mindestens bereichsweise zu einer Faserschicht 82 verdichtet wird, wobei die Fasern eine Bindung eingehen. Der Druck auf das Formelement 44 ist dabei nur so groß, dass die Fasern der Faserschicht 80 zu einer vorgepressten Faserschicht 82 verpresst werden können, aber das flexible Material der zweiten Formfläche 45 im Wesentlichen nicht verformt wird.

Die Fasern der Faserschicht 80, die sich außerhalb des Bereichs zwischen der ersten Formfläche 37 und der zweiten Formfläche 45 befinden, werden nicht verformt oder verpresst.

Nach dem Erreichen des unteren Totpunkts uT wird danach in einem zweiten Formschritt das Formelement 44 überdrückt. Hierzu wird über die zweite Werkzeugplatte 42 ein gegenüber dem im ersten Formschritt aufgebrachten Druck P₁ höherer Druck P₂ aufgebracht und somit das Formelement 44 überdrückt. Das Überdrücken bewirkt eine Verformung des flexiblen Materials in einem Bereich 49, welches innerhalb der Kavität 36 eine Ausgleichsbewegung nur in Richtung des Hinterschnitts 38 ausführen kann. Damit wird durch das Überdrücken erreicht, dass die Fasern der Faserschicht im Bereich des Hinterschnitts 38 über das verformte flexible Material in den Hinterschnitt 38 gedrückt und bei einem weiteren Druck dort verpresst werden, so dass das faserhaltige Material in dem Hinterschnitt 38 mindestens so stark verpresst wird, wie die Fasern der vorgepressten Faserschicht 82. Ein weiteres Überdrücken sorgt schließlich dafür, dass die Fasern in allen Bereichen zu einer gepressten Faserschicht 84 verdichtet werden und die finale Verdichtung der einzelnen Fasern aufweisen.

Um ein Überdrücken ausführen zu können, weist das Formelement 44 mindestens über die gesamte Oberfläche des eintauchenden Formbereichs 46 ein flexibles Material auf, oder das Formelement 44 ist bspw. im Inneren stauchbar, damit auch eine Verformung bspw. in seitlichen Bereichen der zweiten Formfläche 45 erfolgen kann. Für ein Stauchen kann der eintauchende Formbereich 46 bspw. zwei innere Stützkörper aufweisen, die über ein Federelement zueinander beabstandet sind. Die Stützkörper sind nicht verformbar. An der Außenseite weist der eintauchende Formbereich 46 ein flexibles Material auf. Beim Überdrücken wird dann ein oberer Stützkörper relativ zu einem unteren Stützkörper verlagert, ohne dass der Boden des eintauchenden Formbereichs 46 komprimiert werden muss. Damit es nicht zum Einfallen des flexiblen Materials zwischen die Stützkörper kommt, können die Stützköper bspw. hülsenartig ausgebildet sein oder eine Zahnstruktur mit ineinandergreifenden Elementen aufweisen, welche einen Ausgleich bei gleichzeitiger Stützung bereitstellen.

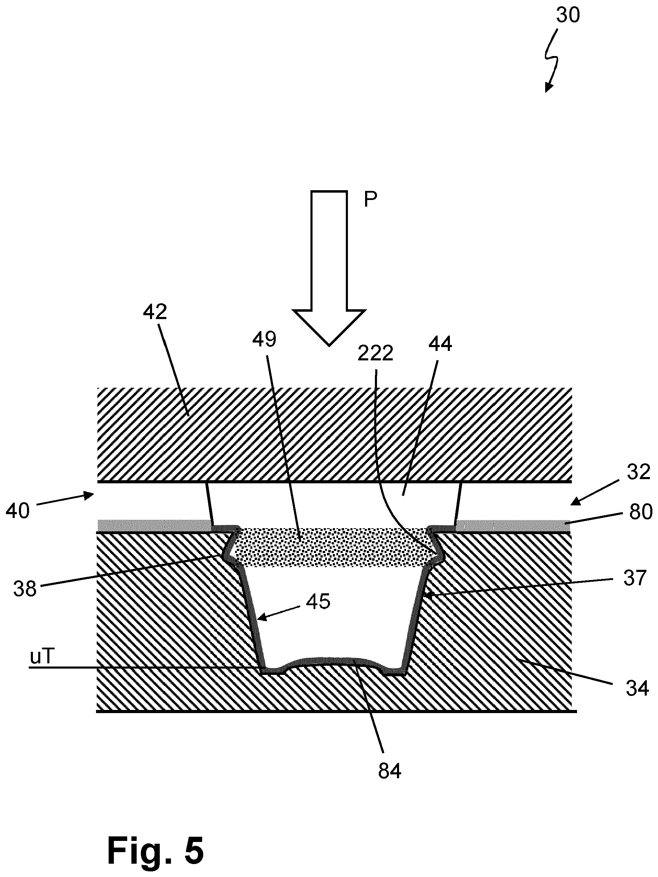

Fig. 5 zeigt eine schematische Darstellung des Formwerkzeugs 30 nach dem zweiten Formschritt. Im Bereich 49 ist das flexible Material in den Hinterschnitt 38 gedrückt und hat wie im restlichen Bereich zwischen der ersten Formfläche 37 und der zweiten Formfläche 45 das faserhaltige Material der ursprünglichen losen Faserschicht 80 zu einer Faserschicht 84 verpresst.

Nach dem zweiten Formschritt wird das Überdrücken beendet, so dass das flexible Material wieder in seine ursprüngliche, nicht verformte Ausgangsstellung zurückkehrt. Der ausgebildete Wulst 222 in der verpressten Faserschicht 84 des Formteils 200 bleibt bestehen. Danach wird die zweite Werkzeugplatte 42 von der Kavität 36 entfernt und das Formteil 200 mit Wulst 222 kann aus der Kavität 36 entnommen werden.

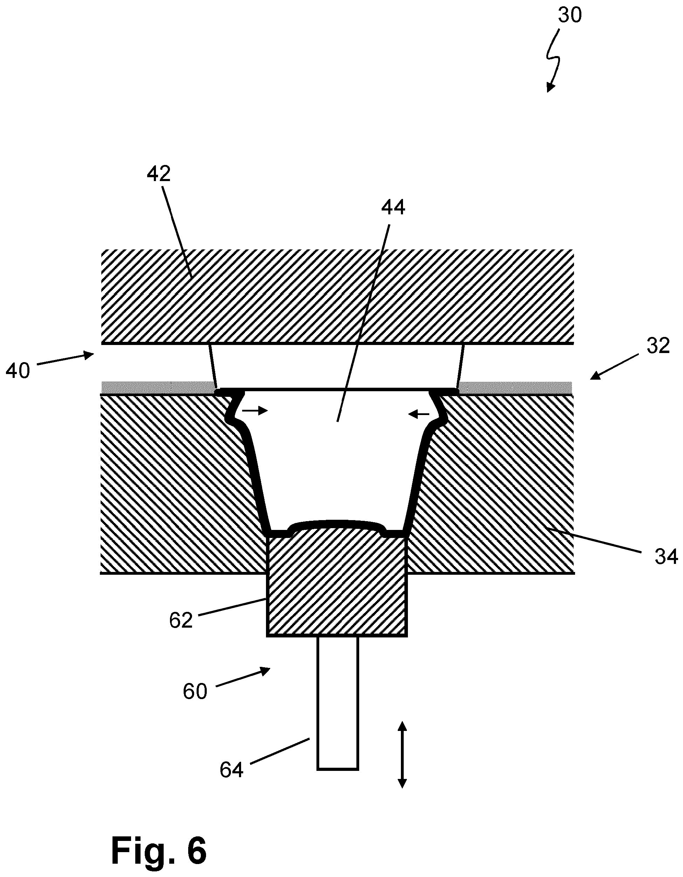

Das Ausbringen des Formteils 200 kann auf verschiedene Arten erfolgen. Bspw. kann das Formwerkzeug 30 einen Auswerfer 60 aufweisen. Fig. 6 zeigt eine schematische Darstellung eines Formwerkzeugs 30 einer weiteren Ausführungsform, das einen Auswerfer 60 aufweist. Der Auswerfer 60 ist mit einer Auswerferstange 64 verbunden, die wie in Fig. 6 gezeigt relativ in Richtung der Kavität 36 verlagert werden kann. Die Auswerferstange 64 ist mit einem Bodenelement 62 verbunden, das in der gezeigten Ausführungsform einen Boden der Kavität 36 bildet. Nach dem zweiten Formschritt kann der Auswerfer 60 vertikal nach oben verlagert werden, wobei das Formteil 200 ausgeworfen wird. Hierzu wird zuvor die zweite Werkzeugplatte 42 nach oben verlagert, um das Auswerfen zu ermöglichen. Beim Auswerfen drückt das verlagerbare Bodenelement 62 das Formteil 200 aus der Kavität 36, wobei es im Bereich der Hinterschnitte 38 kurzfristig zu einem Stauchen des Wulsts 222 des Formteils kommt, wie durch die aufeinander zu gerichteten Pfeile angedeutet. Ein solches Auswerfen kann nach Maßgabe der Ausbildung des Wulsts 222 in der Regel ohne Probleme und eine Beschädigung des Formteils 200 erfolgen. Solche Auswurfabläufe sind im Bereich von Kunststoffteilen mit Hinterschnitten üblich.

Fig. 7 zeigt eine schematische Darstellung eines Formteils 200 als fertiges Produkt aus einem Fasermaterial, hergestellt nach einem hierin beschriebenen Herstellungsprozess mithilfe eines Formwerkzeugs 30 gemäß der beschriebenen Ausführungsformen. Das Formteil 200 aus faserhaltigem Material kann nach dem Formen bspw. einen Restfeuchtegehalt von 1 bis 7 Gew.-% aufweisen.

Das Formteil 200 weist einen Boden 210 und eine sich vom Boden 210 aus erstreckende umlaufende Seitenwand 220 auf, die relativ steil vom Boden 210 aus verläuft. Im oberen Bereich der Seitenwand 220 erstreckt sich umlaufend ein Wulst 222. Am oberen Ende der Seitenwand 220 weist das Formteil 200 einen Rand 230 auf, der im Wesentlichen parallel zum Boden 210 verläuft. Die Wandstärke des Formteils 200 ist im gezeigten Ausführungsbeispiel im Boden 210, in der Seitenwand 220, im Wulst 222 und im Rand 230 überall gleich groß. Das Formteil 200 kann bspw. als Becher im Bereich von Lebensmittelverpackungen, als Blumentopf oder in einem anderen Gebiet eingesetzt werden.

Fig. 8 zeigt eine schematische Darstellung einer zweiten Werkzeugkomponente 40 eines Formwerkzeugs 30 in noch weiteren Ausführungsformen. In einer Ausführungsform weist das Formelement 44 im eintauchenden Bereich ein erstes Material 50 und im durch Überdrücken verformbaren Bereich 49 ein zweites, vom ersten Material 50 verschiedenes Material 52 auf. Das zweite Material 52 ist ein flexibles Material, das durch Überdrücken verformbar ist. Das erste Material 50 kann bspw. ein nicht verformbares Material oder ein Material mit gegenüber dem zweiten Material 52 schwächerer Verformbarkeit sein. Auch können sich das erste und das zweite Material 50, 52 durch Schwachstellen, Verstärkungen oder andere, die Eigenschaften der Materialien beeinflussende Maßnahmen unterscheiden.

Zusätzlich oder alternativ kann ein Formelement 44 einen Stützkörper 56 aufweisen, der an seiner Außenseite mit einem flexiblen Material beschichtet ist, welches bei Überdrücken verformbar ist. Der Stützkörper 56 selbst ist nicht verformbar und kann hierzu bspw. aus einem Metall oder einer Metalllegierung bestehen. Über den Stützkörper 56 kann das Formelement 44 bspw. mit einer zweiten Werkzeugplatte 42 verbunden, bspw. verschraubt sein. Hierzu kann der Stützkörper auf der der zweiten Werkzeugplatte 42 zugewandten Seite eine Öffnung mit Gewinde oder einen abstehenden Gewindestab aufweisen, welche mit korrespondierenden Elementen der Werkzeugplatte 42 verbunden sein können.

In weiteren Ausführungen kann bspw. bei der Verformung von Kunststofffolien ein Einbringen von Druckluft erfolgen, um die Verformung zu unterstützen. Hierzu können bspw. im Formelement 44 entsprechende Kanäle und Öffnungen vorgesehen sein. Alternativ kann auch ein Bereich der zweiten Formfläche 45 über Druckluft zusätzlich verformt ("aufgeblasen") werden, um die Verformung zu unterstützen. Dies kann für faserhaltiges Material und Kunststofffolien (mit und ohne Öffnungen) zum Einsatz kommen. Schließlich können auch in der ersten Formfläche 37 Öffnungen zum Ansaugen einer Folie vorgesehen sein, um den Formprozess zu unterstützen.

Die Ausbildung eines Formelements 44 mit einem im Kontaktbereich zwischen erster Werkzeugkomponente 32 und zweiter Werkzeugkomponente 40 vorgesehenem flexiblen Material kann in weiteren Ausführungen zusätzlich ein Abdichten der Kavität 36 bzw. des Formraums durch das flexible Material bewirken, so dass es zu keinem Entweichen von Fasern und/oder (Form)-Luft kommen kann.

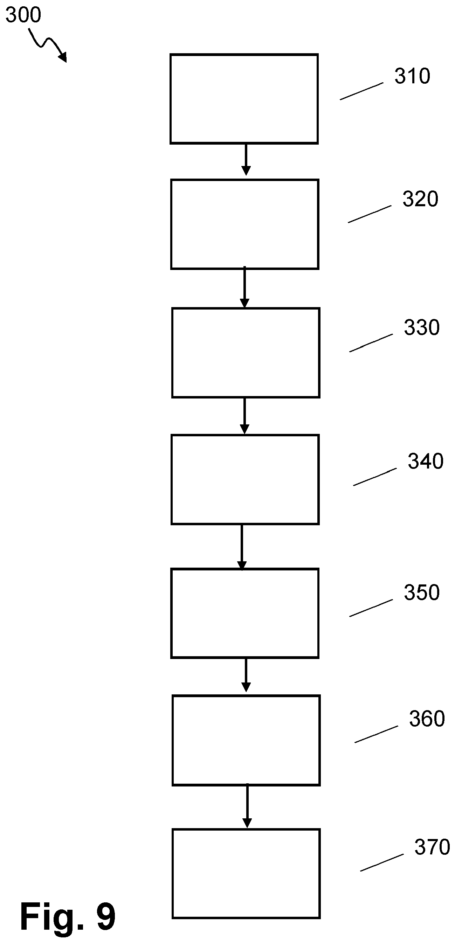

Fig. 9 zeigt ein Verfahren 300 zum Herstellen eines Formteils 200 unter Verwendung eines Formwerkzeugs 30. In einem ersten Verfahrensschritt 310 erfolgt das Bereitstellen von formbarem Material. Das formbare Material kann je nach Art des Materials (faserhaltiges Material, Kunststofffolie) auf unterschiedliche Art und Weise bereitgestellt werden. So kann die Bereitstellung die Herstellung und/oder Verarbeitung eines formbaren Materials umfassen.

In einem nachfolgenden Verfahrensschritt 320 erfolgt ein Zuführen von formbarem Material. Beispielsweise kann bei der Herstellung von Formteilen 200 aus einem Kunststoff das Material als Folienbahn zugeführt werden. Gleiches gilt bei der Herstellung von Formteilen 200 aus Folien mit einer netzartigen Struktur. Eine Kunststofffolie kann bspw. zwischen die Werkzeugplatten 34 und 42 gebracht werden, wobei die Folie dabei noch nicht in eine Kavität 36 eingebracht wird. Die Zuführung von faserhaltigem Material kann über eine Materialbahn erfolgen, die bspw. in einem vorgelagerten Verfahrensschritt hergestellt werden kann.

In einem folgenden Verfahrensschritt 330 erfolgt ein Einbringen des formbaren Materials in die Kavität 36 mindestens eines Formwerkzeugs 30. Das Einbringen von formbarem Material kann bspw. durch direktes Einbringen (z.B. Einblasen) von losen Fasern in die Kavität 36 erfolgen. Alternativ kann eine Bahn (Folie, Faserschicht) über das Formelement 44 in die Kavität 36 gedrückt werden, wie es im Thermoformen über einen Streckhelfer oder Formstempel bekannt ist.

In einem Verfahrensschritt 340 erfolgt dann ein Verpressen des formbaren Materials durch ein Drücken des Formelements 44 in die Kavität 36. Anschließend erfolgt in einem Verfahrensschritt 350 ein Überdrücken des Formelements 44 nach Erreichen eines unteren Totpunkts uT, so dass ein flexibles Material des Formelements 44 verformt wird und hierbei formbares Material in freie Bereiche, wie bspw. Hinterschnitte 38, drückt und dort verpresst. Der Druck auf das Formelement 44 kann in zwei separaten Schritten oder kontinuierlich erfolgen, wobei der Druck auf das Formelement 44 solange erhöht wird, bis die vollständige Verformung und das Verpressen des formbaren Materials abgeschlossen sind. Danach wird der Druck reduziert und in einem Verfahrensschritt 360 das Formwerkzeug 30 geöffnet. Anschließend wird in einem Verfahrensschritt 370 das in der Kavität 36 gefertigte Formteil 200 ausgeworfen. Während des Verpressens und bereits beim Einbringen des formbaren Materials in die Kavität 36 kann diese temperiert werden, um den Formprozess zu unterstützen.

Der vorstehende Ablauf kann dann für ein neues Formteil 200 wiederholt werden.

Vorteilhafterweise lassen sich mit der hierin beschriebenen Ausführung mit einfachen Mitteln Formteile herstellen und sogar Hinterschnitte 38 ohne aufwendige Werkzeuggestaltungen und Bewegungsabläufe realisieren. Bei der Herstellung von Formteilen aus einer Kunststofffolie kann sogar vollständig auf das Einbringen von Formluft oder das Erzeugen von Vakuum verzichtet werden, so dass das Formwerkzeug weiter vereinfacht ausgeführt sein kann, und die Steuerung deutlich vereinfacht ist. Bei faserhaltigen Materialien können Formteile 200 erzeugt werden, welche durch Überdrücken des Formelements 44 eine Reduzierung der Wanddicke erfahren können. Damit kann insbesondere ein Ausgleich für eine natürliche Reduzierung der Dicke Rechnung getragen werden.

### Bezugszeichenliste

- 10: Steuerung
- 20: Zuführeinrichtung
- 30: Formwerkzeug
- 32: erste Werkzeugkomponente
- 34: erste Werkzeugplatte
- 36: Kavität
- 37: erste Formfläche
- 38: Hinterschnitt
- 39: Randbereich
- 40: zweite Werkzeugkomponente
- 42: zweite Werkzeugplatte
- 44: Formelement
- 45: zweite Formfläche
- 46: oberer Formbereich
- 47: eintauchender Formbereich
- 48: untere Formfläche
- 49: Bereich
- 50: erstes Material
- 52: zweites Material
- 56: Stützkörper
- 60: Auswerfer
- 62: Bodenelement
- 64: Auswerferstange
- 80: Faserschicht
- 81: Ausbuchtung
- 82: Faserschicht
- 84: Faserschicht
- 100: Formeinrichtung
- 200: Formteil
- 210: Boden
- 220: Seitenwand
- 222: Wulst
- 230: Rand
- 300: Verfahren
- 310: Verfahrensschritt
- 320: Verfahrensschritt
- 330: Verfahrensschritt
- 340: Verfahrensschritt
- 350: Verfahrensschritt
- 360: Verfahrensschritt
- 370: Verfahrensschritt

## Patentansprüche

1. Formwerkzeug zur Herstellung von Formteilen (200) aus einem formbaren Material mit mindestens einer ersten Werkzeugkomponente (32) und mindestens einer zweiten Werkzeugkomponente (40), wobei
- die erste Werkzeugkomponente (32) eine Kavität (36) aufweist, in welche formbares Material einbringbar ist,
- die zweite Werkzeugkomponente (40) zur Herstellung eines Formteils (200) in die Kavität (36) der ersten Werkzeugkomponente (32) einbringbar ist,
- die zweite Werkzeugkomponente (40) eine zweite Formfläche (45) aufweist, über welche im geschlossenen Zustand des Formwerkzeugs (30) formbares Material gegen eine korrespondierende erste Formfläche (37) der Kavität (36) der ersten Werkzeugkomponente (32) drückbar ist, und
- die zweite Werkzeugkomponente (40) mindestens partiell ein flexibles Material aufweist, welches mindestens einen Abschnitt der zweiten Formfläche (45) bildet, wobei das flexible Material im geschlossenen Zustand des Formwerkzeugs (30) durch ein Überdrücken der zweiten Werkzeugkomponente (40) nach dem Erreichen eines unteren Totpunkts (uT) in der Kavität (36) verformbar ist, um das formbare Material gegen die erste Formfläche (37) zu drücken, **dadurch gekennzeichnet, dass** die Kavität (36) mindestens einen Hinterschnitt (38) aufweist und das formbare Material über das flexible Material des mindestens einen Abschnitts durch ein Überdrücken der zweiten Werkzeugkomponente (40) in den Hinterschnitt (38) der Kavität (36) drückbar ist, wobei
ein in die Kavität (36) der ersten Werkzeugkomponente (32)
eintauchendes Formelement (44) entweder über die gesamte Oberfläche eines in die Kavität (36) der ersten Werkzeugkomponente (32) eintauchenden Formbereichs (46) das flexible Material aufweist, oder
einen oberen Stützkörper und einen unteren Stützkörper aufweist, wobei beim Überdrücken der obere Stützkörper relativ zu dem unteren Stützkörper verlagert wird, ohne dass ein Boden des eintauchenden Formbereichs (46) komprimiert werden muss und das formbare Material in den Hinterschnitt (38) der Kavität (36) gedrückt wird.

2. Formwerkzeug nach Anspruch 1, wobei die zweite Formfläche (45) mindestens partiell Öffnungen aufweist.

3. Formwerkzeug nach einem der Ansprüche 1 oder 2, wobei ein in die Kavität (36) der ersten Werkzeugkomponente (32) eintauchendes Formelement (44) der zweiten Werkzeugkomponente (40) über die gesamte Oberfläche des in die Kavität (36) der ersten Werkzeugkomponente (32) eintauchenden Formbereichs (46) ein flexibles Material aufweist das das formbare Material bildet und vollständig aus dem flexiblen Material besteht.

4. Formwerkzeug nach einem der Ansprüche 1 bis 3, wobei ein in die Kavität (36) der ersten Werkzeugkomponente (32) eintauchendes Formelement (44) der zweiten Werkzeugkomponente (40) massiv oder als Hohlkörper ausgebildet ist.

5. Formwerkzeug nach Anspruch 4, wobei das Formelement (44) innenliegende Stützstrukturen aufweist.

6. Formwerkzeug nach Anspruch 5, wobei die Stützstrukturen eine Verformung der zweiten Formfläche (45) beim Überdrücken beeinflussen.

7. Formwerkzeug nach einem der Ansprüche 1 oder 2, wobei die gesamte zweite Formfläche (45) ein flexibles Material aufweist, das einen innenliegenden Kern aus einem nicht verformbaren Material umgibt.

8. Formwerkzeug nach einem der Ansprüche 1 bis 7, wobei das flexible Material Verstärkungen und/oder Schwachstellen aufweist, welche die Verformbarkeit des flexiblen Materials beim Überdrücken beeinflussen.

9. Formwerkzeug nach einem der Ansprüche 1 bis 8, wobei das flexible Material aus verschiedenen Materialien besteht, die sich im Hinblick auf die Verformbarkeit des flexiblen Materials beim Überdrücken unterscheiden.

10. Formwerkzeug nach einem der Ansprüche 1 bis 9, wobei die zweite Formfläche (45) mindestens zwei Abschnitte aus einem flexiblen Material aufweist, die sich im Hinblick auf die Verformbarkeit des flexiblen Materials beim Überdrücken unterscheiden.

11. Formwerkzeug nach einem der Ansprüche 1 bis 10, wobei das flexible Material Silikon und/oder thermoplastische Elastomere aufweist oder daraus besteht.

12. Formwerkzeug nach einem der Ansprüche 1 bis 11, wobei die erste Werkzeugkomponente (32) und/oder die zweite Werkzeugkomponente (40) über mindestens eine Heizeinrichtung beheizbar sind.

13. Verfahren zur Herstellung von Formteilen (200) aus einem formbaren Material unter Verwendung eines Formwerkzeugs (30) nach einem der vorherigen Ansprüche, wobei das Verfahren folgende Schritte aufweist:
- Einbringen des formbaren Materials in die Kavität (36) der ersten Werkzeugkomponente (32),
- Einbringen der zweiten Werkzeugkomponente (40) in die Kavität (36) der ersten Werkzeugkomponente (32) durch relative Verlagerung der ersten Werkzeugkomponente (32) und der zweiten Werkzeugkomponente (40), wobei die zweite Formfläche (45) der zweiten Werkzeugkomponente (40) das formbare Material mindestens bereichsweise gegen die erste Formfläche (37) bewegt, und
- Überdrücken der mindestens einen zweiten Werkzeugkomponente (40) nach Erreichen eines unteren Totpunkts (uT) innerhalb der Kavität (36), wodurch ein flexibles Material, das mindestens einen Abschnitt der zweiten Formfläche (45) bildet, verformt wird und durch die Verformung das flexible Material das formbare Material gegen einen korrespondierenden Abschnitt der ersten Formfläche (37) drückt.

14. Verfahren nach Anspruch 13, wobei nach dem Formen des Formteils (200) in der Kavität (36) das Überdrücken beendet wird, wodurch das flexible Material seine vor dem Überdrücken vorliegende Form wieder einnimmt und anschließend die mindestens eine zweite Werkzeugkomponente (40) aus der Kavität (36) bewegt wird.

## Claims

1. A molding tool for producing molded parts (200) from a moldable material, having at least one first tool component (32) and at least one second tool component (40),
- the first tool component (32) having a cavity (36) into which moldable material can be introduced,
- the second tool component (40) being introducible into the cavity (36) of the first tool component (32) to produce a molded part (200),
- the second tool component (40) having a second molding surface (45), via which, in the closed state of the molding tool (30), moldable material can be pressed against a corresponding first molding surface (37) of the cavity (36) of the first tool component (32), and
- the second tool component (40) having at least partially a flexible material which forms at least a section of the second molding surface (45), the flexible material being deformable in the closed state of the molding tool (30) when the second tool component (40) is pressing over after reaching a bottom dead center (uT) in the cavity (36) in order to press the moldable material against the first molding surface (37), wherein the cavity (36) has at least one undercut (38) and the moldable material can be pressed into the undercut (38) of the cavity (36) via the flexible material of the at least one section by pressing over this with the second tool component (40), a mold element (44) immersed into the cavity (36) of the first tool component (32) having either the flexible material over the entire surface of a mold region (46) immersed into the cavity (36) of the first tool component (32), or having an upper support body and a lower support body, the upper support body being displaced relative to the lower support body during pressing over without a bottom of the immersing mold region (46) having to be compressed and the moldable material being pressed into the undercut (38) of the cavity (36).

2. The molding tool of claim 1, the second molding surface (45) having at least partial openings.

3. The molding tool of either of claims 1 or 2, a mold element (44) of the second tool component (40), when immersed into the cavity (36) of the first tool component (32), having a flexible material over the entire surface of the mold region (46) immersed into the cavity (36) of the first tool component (32), which flexible material forms the moldable material and consists entirely of the flexible material.

4. The molding tool of any of claims 1 to 3, a mold element (44) of the second tool component (40) that is immersed into the cavity (36) of the first tool component (32) being embodied as solid or as a hollow body.

5. The molding tool of claim 4, wherein the mold element (44) has internal support structures.

6. The molding tool of claim 5, the support structures influencing deformation of the second molding surface (45) when pressing over.

7. The molding tool of one of claims 1 or 2, the entire second molding surface (45) comprising a flexible material surrounding an inner core made of a non-deformable material.

8. The molding tool of any of claims 1 to 7, the flexible material having reinforcements and/or weaknesses that affect the deformability of the flexible material when pressing over.

9. The molding tool of any of claims 1 to 8, the flexible material being made of different materials that differ in terms of deformability of the flexible material when pressing over.

10. The molding tool of any of claims 1 to 9, the second molding surface (45) comprising at least two sections made of a flexible material that differ in terms of deformability of the flexible material when pressing over.

11. The molding tool of any of claims 1 to 10, the flexible material comprising or consisting of silicone and/or thermoplastic elastomers.

12. The molding tool of any of claims 1 to 11, the first tool component (32) and/or the second tool component (40) being heatable via at least one heating device.

13. Method for producing molded parts (200) from a moldable material using a molding tool (30) of any one of the preceding claims, the method comprising the following steps:
- Inserting the moldable material into the cavity (36) of the first tool component (32),
- Inserting the second tool component (40) into the cavity (36) of the first tool component (32) by relative displacement of the first tool component (32) and the second tool component (40), the second molding surface (45) of the second tool component (40) moving the moldable material at least partially against the first molding surface (37), and
- Pressing over the at least one second tool component (40) after reaching a bottom dead center (uT) within the cavity (36), whereby a flexible material forming at least a section of the second molding surface (45) is deformed and, as a result of the deformation, the flexible material presses the moldable material against a corresponding section of the first molding surface (37).

14. The method of claim 13, the pressing over being stopped after molding the molded part (200) in the cavity (36), whereby the flexible material resumes the shape it has prior to the pressing over, and subsequently the at least one second tool component (40) being moved out of the cavity (36).

## Revendications

1. Outil de formage pour la fabrication de pièces formées (200) à partir d'un matériau formable avec au moins un premier composant d'outil (32) et au moins un deuxième composant d'outil (40),
- le premier composant d'outil (32) présentant une cavité (36) dans laquelle du matériau formable peut être introduit,
- le deuxième composant d'outil (40) pouvant être introduit dans la cavité (36) du premier composant d'outil (32) pour la fabrication d'une pièce formée (200),
- le deuxième composant d'outil (40) présentant une deuxième surface de formage (45) par laquelle du matériau formable peut être introduit dans l'état fermé de l'outil de formage (30) contre une première surface de formage correspondante (37) de la cavité (36) du premier composant d'outil (32) peut être pressé, et
- le deuxième composant d'outil (40) présente au moins partiellement un matériau flexible qui forme au moins une partie de la deuxième surface de formage (45), le matériau flexible étant déformable à l'état fermé de l'outil de formage (30) par surpression du deuxième composant d'outil (40) après avoir atteint un point mort bas (uT) dans la cavité (36) pour presser le matériau formable contre la première surface de formage (37), **caractérisé en ce que** la cavité (36) présente au moins une contre-dépouille (38) et le matériau formable est déformable sur le matériau flexible du au moins une section peut être pressée dans la contre-dépouille (38) de la cavité (36) par une surpression du deuxième composant d'outil (40), un élément de forme (44) plongeant dans la cavité (36) du premier composant d'outil (32) présentant soit un matériau flexible sur toute la surface d'une zone de forme (46) plongeant dans la cavité (36) du premier composant d'outil (32), soit un corps de support supérieur et un corps de support inférieur, le corps de support supérieur étant déplacé par rapport au corps de support inférieur lors de la surpression, sans qu'un fond de la zone de forme plongeante (46) soit comprimé et que le matériau formable soit pressé dans la contre-dépouille (38) de la cavité (36).

2. Outil de formage selon la revendication 1, dans lequel la deuxième surface de formage (45) présente au moins partiellement des ouvertures.

3. Outil de formage selon l'une quelconque des revendications 1 ou 2, dans lequel un élément de formage (44) du deuxième composant d'outil (40) plongeant dans la cavité (36) du premier composant d'outil (32) présente un matériau flexible formant le matériau formable et entièrement constitué du matériau flexible sur toute la surface de la zone de formage (46) plongeant dans la cavité (36) du premier composant d'outil (32).

4. Outil de formage selon l'une quelconque des revendications 1 à 3, dans lequel un élément de formage (44) du deuxième composant d'outil (40), qui plonge dans la cavité (36) du premier composant d'outil (32), est réalisé sous forme solide ou sous forme de corps creux.

5. Outil de formage selon la revendication 4, dans lequel l'élément de formage (44) présente des structures de support internes.

6. Outil de formage selon la revendication 5, où les structures de support influencent une déformation de la deuxième surface de formage (45) lors de la surpression.

7. Outil de formage selon l'une quelconque des revendications 1 ou 2, dans lequel la totalité de la deuxième surface de formage (45) comprend un matériau flexible qui entoure un noyau interne d'un matériau non déformable.

8. Outil de formage selon l'une quelconque des revendications 1 à 7, dans lequel le matériau flexible présente des renforts et/ou des points faibles qui affectent la déformabilité du matériau flexible lors de la surpression.

9. Outil de formage selon l'une quelconque des revendications 1 à 8, dans lequel le matériau flexible est constitué de différents matériaux qui diffèrent en termes de déformabilité du matériau flexible lors de la surpression.

10. Outil de formage selon l'une quelconque des revendications 1 à 9, dans lequel la deuxième surface de formage (45) présente au moins deux sections en matériau flexible qui diffèrent en termes de déformabilité du matériau flexible lors de la surpression.

11. Outil de formage selon l'une quelconque des revendications 1 à 10, dans lequel le matériau flexible comprend ou est constitué de silicone et/ou d'élastomères thermoplastiques.

12. Outil de formage selon l'une quelconque des revendications 1 à 11, dans lequel le premier composant d'outil (32) et/ou le deuxième composant d'outil (40) peuvent être chauffés par au moins un dispositif de chauffage.

13. Procédé de fabrication de pièces formées (200) en un matériau formable à l'aide d'un outil de formage (30) selon l'une quelconque des revendications précédentes, le procédé comprenant les étapes suivantes :
- introduction du matériau formable dans la cavité (36) du premier composant d'outil (32),
- introduction du deuxième composant d'outil (40) dans la cavité (36) du premier composant d'outil (32) par déplacement relatif du premier composant d'outil (32) et du deuxième composant d'outil (40), la deuxième surface de forme (45) du deuxième composant d'outil (40) déplaçant le matériau formable au moins partiellement contre la première surface de forme (37), et
- écrasement du au moins un deuxième composant d'outil (40) après avoir atteint un point mort bas (uT) à l'intérieur de la cavité (36), ce qui entraîne la déformation d'un matériau flexible formant au moins une partie de la deuxième surface de forme (45) et la déformation du matériau flexible appuyant le matériau formable contre une partie correspondante de la première surface de forme (37).

14. Procédé selon la revendication 13, dans lequel, après le formage de la pièce formée (200) dans la cavité (36), la surpression est terminée, grâce à quoi le matériau flexible reprend sa forme présente avant la surpression, puis le au moins un deuxième composant d'outil (40) est déplacé hors de la cavité (36).
